# EUROPÄISCHE PATENTSCHRIFT

(11) **EP 1 013 408 B1**
(45) Veröffentlichungstag und Bekanntmachung des Hinweises auf die Patenterteilung: **05.06.2002**
(21) Anmeldenummer: 99121665.6
(22) Anmeldetag: 02.11.1999
(51) Int. Cl.: B29C 70/32, D21F 3/02, B29D 29/00

(54) **Pressmantel und Verfahren zur Herstellung**
Press belt and manufacturing process
Courroie de pressage et procédé de fabrication

(30) Priorität: 23.12.1998 DE 19860099
(43) Veröffentlichungstag der Anmeldung: 28.06.2000
(73) Patentinhaber: Voith Paper Patent GmbH, 89522 Heidenheim (DE)
(72) Erfinder: Matuschczyk, Uwe, 73312 Geislingen (DE)

(56) Entgegenhaltungen:
- EP-A- 0 221 336
- EP-A- 0 361 419
- WO-A-95/29293
- US-A- 4 254 011
- US-A- 4 650 193
- US-A- 4 889 674
- US-A- 5 836 242
- DATABASE WPI Section Ch, Week 199713, April 1997 (1997-04) Derwent Publications Ltd., London, GB; Class A23, AN 1997-140236 [13] XP002136265 & JP 09 019988 A (AICA KOGYO CO LTD), 21. Januar 1997 (1997-01-21)
- OERTEL G., ABELE L.: 'Kunststoff- Handbuch. 7. Band: Polyurethane', 1983, CARL HANSER VERLAG, MÜNCHEN, WIEN * Seite 616 - Seite 617 *

## Beschreibung

Die Erfindung betrifft einen aus einem gießfähigen elastomeren Material bestehenden, zylindrischen Preßmantel für eine Preßvorrichtung zur Behandlung bahnförmigen Gutes, insbesondere zum Entwässern oder Glätten einer Faserstoffbahn, mit in dem elastomeren Material eingebetteten Verstärkungsfäden und/oder Verstärkungsgewebe, wobei die Härte des Materials im Bereich der Innen- und der Außenseite des Preßmantels unterschiedlich ist sowie Verfahren zur Herstellung des Preßmantels.

Ein derartiger Preßmantel ist beispielsweise aus der DE-OS 196 54 751 und der DE-OS 196 54 751 insbesondere beim Einsatz von Verstärkungsfäden ist es dabei möglich, den Preßmantel aus einem homogenen Material zu gießen. Wegen der relativ großen Abstände zwischen den Verstärkungsfäden wird dabei eine ausreichende Durchdringung möglich.

Diese Herstellung in einem Guß bringt insbesondere Vorteile bei der Herstellung und hinsichtlich der Festigkeit.

Je nach Anwendungsfall kann es jedoch erforderlich sein, daß Innen- und Außenseite unterschiedliche Härte aufweisen sollen. Eine härtere Außenseite hat beispielsweise Vorteile hinsichtlich der Verschleißfestigkeit, wenn der Preßmantel mit Rillen oder Blindbohrungen zur Aufnahme des ausgepreßten Wassers versehen ist. Im Gegensatz dazu führt eine härtere Innenseite zu verringerter Ölaufnahme und verbesserten Laufeigenschaften bei hydraulisch abgestützten Preßmänteln.

Die Aufgabe der Erfindung ist es daher, einen Preßmantel sowie ein Herstellungsverfahren zu entwickeln, wobei der Preßmantel an Innen- und Außenseite verschieden hart ist und aus nur einem Material besteht.

Erfindungsgemäß wurde die Aufgabe dadurch gelöst, daß -entsprechend Anspruch 1- das elastomere Material zumindest einen Bestandteil enthält, welcher beim Gießen auf eine kältere Gießform zu einer stärkeren Kristallisation im Bereich der Gießform führt.

Neben der stärkeren Kristallisation sollte es dabei auch zu einem höheren Anteil von Hartsegmenten im Bereich der Gießform kommen.

Für den zur verstärkten Kristallisation führenden Bestandteil eignen sich Polymere, insbesondere Prepolymere. Daneben befindet sich meist noch ein Vernetzer in dem elastomeren Material.

Im Ergebnis kommt es dabei zu Härteunterschieden zwischen Innen- und Außenseite, die im Bereich vor 2 bis 7 Shore A liegen.

Durch die Wahl des Herstellungsverfahrens wird somit eine Einflußnahme darauf möglich, welche Seite härter ausgebildet sein soll.

Zur Erzeugung einer härteren Innenseite wird das elastomere Material auf die Außenseite einer zylindrischen Gießform aufgetragen.

Falls die Außenseite härter sein soll, so wird die das elastomere Material auf die Innenseite der zylindrischen Gießform aufgetragen, was vorzugsweise als Schleuderguß erfolgt.

In beiden Fällen sollte die Temperatur der Gießform zwischen 10 und 100 °C, vorzugsweise zwischen 20 und 80 °C, unter der des elastomeren Materials liegen.

Verbessert wird die Herausbildung der verschiedenen Härtegrade noch durch die Verstärkungsfäden bzw. das Verstärkungsgewebe, da dieses als isolierende Schicht wirkt und somit der Temperatureinfluß der kalten Gießform auf den Bereich zwischen Kontaktfläche und Verstärkungsfäden bzw. Verstärkungsgewebe beschränkt ist.

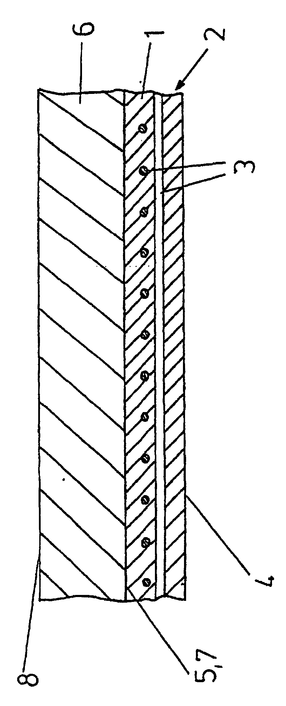

Nachfolgend soll die Erfindung an einem Ausführungsbeispiel näher erläutert werden. In der beigefügten Zeichnung zeigt die Figur einen schematischen Teilschnitt durch den rohrförmigen Preßmantel 2 sowie die zylindrische Gießform 6. Der Preßmantel 2 hat dabei eine Stärke von ca. 5-6 mm, wobei die Innenseite glatt ausgeführt und die Außenseite meist mit Blindbohrungen oder Rillen versehen wird.

Das gießförmige elastomere Material 1 des Preßmantels 2 ist durch ein Prepolymer ergänzt, welches beim Gießen auf eine kältere Gießform 6 zu einer stärkeren Kristallisation sowie einem höheren Anteil von Hartsegmenten im Bereich der Gießform 6 führt.

Im Preßmantel 2 befinden sich längs und quer verlaufende Verstärkungsfäden 3, die vollständig vom elastomeren Material 1 umschlossen sind.

Das elastomere Material wird im allgemeinen bei Temperaturen zwischen 50 und 100 °C verarbeitet, wobei die Temperatur der Gießform 6 zwischen 20 und 80 °C unter der des elastomeren Materials 1 liegt.

Im Beispiel wird ein Preßmantel 2 mit härterer Außenseite 5 hergestellt, was dadurch geschieht, daß das elastomere Material 1 auf die Innenseite 7 einer zylindrischen Gießform 6 aufgetragen wird. Soll die Innenseite 4 härter sein, so wird das elastomere Material 1 auf die Außenseite 8 einer zylindrischen Gießform 6 aufgetragen.

Die Verstärkungsfäden 3 wirken isolierend, so daß der Temperatureinfluß der Gießform 6 hier auf den Bereich der Außenseite 5 des Preßmantels 2 beschränkt ist.

Im Ergebnis können Härteunterschiede zwischen Innen- 4 und Außenseite 5 des Preßmantels 2 von 2 bis 7 Shore A erzeugt werden.

## Patentansprüche

1. Aus einem gießfähigen elastomeren Material (1) bestehender, zylindrischer Preßmantel (2) für eine Preßvorrichtung zur Behandlung bahnförmigen Gutes, insbesondere zum Entwässern oder Glätten einer Faserstoffbahn, mit in dem elastomeren Material (1) eingebetteten Verstärkungsfäden (3) und/oder Verstärkungsgewebe, wobei die Härte des Materials (1) im Bereich der Innen- (4) und der Außenseite (5) des Preßmantels (2) unterschiedlich ist, **dadurch gekennzeichnet, daß**
das elastomere Material (1) zumindest einen Bestandteil enthält, welcher beim Gießen auf eine kältere Gießform (6) zu einer stärkeren Kristallisation im Bereich der Gießform (6) führt.

2. Preßmantel nach Anspruch 1, **dadurch gekennzeichnet, daß** im Bereich der stärkeren Kristallisation auch der Anteil von Hartsegmenten höher ist.

3. Preßmantel nach Anspruch 1 oder 2, **dadurch gekennzeichnet, daß** der zur verstärkten Kristallisation führende Bestandteil ein Polymer, vorzugsweise ein Prepolymer ist.

4. Preßmantel nach einem der vorhergehenden Ansprüche, **dadurch gekennzeichnet, daß**
der Härteunterschied zwischen Innen- (4) und Außenseite (5) des Preßmantels (2) im Bereich von 2 bis 7 Shore A liegt.

5. Verfahren zur Herstellung eines Preßmantels (2) mit härterer Innenseite (4) nach einem der vorhergehenden Ansprüche, **dadurch gekennzeichnet, daß** das elastomere Material (1) auf die Außenseite (8) einer zylindrischen Gießform (6) aufgetragen wird, wobei das elastomere Material (1) eine höhere Temperatur als die Gießform (6) aufweist.

6. Verfahren zur Herstellung eines Preßmantels mit härterer Außenseite (5) nach einem der Ansprüche 1 bis 4, **dadurch gekennzeichnet, daß** das elastomere Material (1) auf die Innenseite (7) einer zylindrischen Gießform (6) aufgetragen wird, wobei das elastomere Material (1) eine höhere Temperatur als die Gießform (6) aufweist.

7. Verfahren nach Anspruch 5 oder 6, **dadurch gekennzeichnet, daß** die Temperatur der Gießform (6) zwischen 10 und 100 °C, vorzugsweise zwischen 20 und 80 °C unter der des elastomeren Materials (1) liegt.

## Claims

1. Cylindrical press cover (2), consisting of an elastomeric material (1) which can be cast, for a pressing apparatus for treating web material, in particular for dewatering or calendering a fibrous web, having reinforcing filaments (3) and/or reinforcing fabrics embedded in the elastomeric material (1), the hardness of the material (1) being different in the area of the inner (4) and of the outer side (5) of the press cover (2), **characterized in that** the elastomeric material (1) contains at least one constituent which, when poured onto a relatively cold mould (6), leads to more intense crystalization in the area of the mould (6).

2. Press cover according to Claim 1, **characterized in that** the proportion of hard segments is also higher in the area of the more intense crystalization.

3. Press cover according to Claim 1 or 2, **characterized in that** the constituent leading to more intense crystalization is a polymer, preferably a prepolymer.

4. Press cover according to one of the preceding claims, **characterized in that** the difference in hardness between the inner (4) and outer side (5) of the press cover (2) is in the range from 2 to 7 Shore A.

5. Process for the production of a press cover (2) with a harder inner side (4) according to one of the preceding claims, **characterized in that** the elastomeric material (1) is applied to the outer side (8) of a cylindrical mould (6), the elastomeric material (1) being at a higher temperature than the mould (6).

6. Process for the production of a press cover with a harder outer side (5) according to one of Claims 1 to 4, **characterized in that** the elastomeric material (1) is applied to the inner side (7) of a cylindrical mould (6), the elastomeric material (1) being at a higher temperature than the mould (6).

7. Process according to Claim 5 or 6, **characterized in that** the temperature of the mould (6) is between 10 and 100° C, preferably between 20 and 80°C, below that of the elastomeric material (1).

## Revendications

1. Garniture de presse cylindrique (2), composée d'un matériau élastomère moulable (1), pour un dispositif de presse pour le traitement d'une matière en forme de bande, en particulier pour l'essorage ou le lissage d'une bande de matière fibreuse, avec des fibres de renforcement (3) et/ou un treillis de renforcement noyé(es) dans le matériau élastomère (1), dans laquelle la dureté du matériau (1) est différente dans la région de la face intérieure (4) et de la face extérieure (5) de la garniture de presse (2), **caractérisée en ce que** le matériau élastomère (1) contient au moins un composant, qui conduit à une plus forte cristallisation dans la région du moule de coulée (6) lors de la coulée sur un moule de coulée (6) plus froid.

2. Garniture de presse suivant la revendication 1, **caractérisée en ce que** la fraction de segments durs est également plus élevée dans la région de plus forte cristallisation.

3. Garniture suivant la revendication 1 ou 2, **caractérisée en ce que** le composant conduisant à la recristallisation plus forte est un polymère, de préférence un prépolymère.

4. Garniture de presse suivant l'une quelconque des revendications précédentes, **caractérisée en ce que** la différence de dureté entre la face intérieure (4) et la face extérieure (5) de la garniture de presse (2) se situe dans la gamme de 2 à 7 Shore A.

5. Procédé pour la fabrication d'une garniture de presse (2) avec une face intérieure plus dure (4) suivant l'une quelconque des revendications précédentes, **caractérisé en ce que** le matériau élastomère (1) est appliqué sur la face extérieure (8) d'un moule de coulée cylindrique (6), le matériau élastomère (1) présentant une température plus élevée que le moule de coulée (6).

6. Procédé pour la fabrication d'une garniture de presse avec une face extérieure plus dure (5) suivant l'une quelconque des revendications 1 à 4, **caractérisé en ce que** le matériau élastomère (1) est appliqué sur la face intérieure (7) d'un moule de coulée cylindrique (6), le matériau élastomère (1) présentant une température plus élevée que le moule de coulée (6).

7. Procédé suivant la revendication 5 ou 6, **caractérisé en ce que** la température du moule de coulée (6) est située entre 10 et 100°C, de préférence entre 20 et 80°C, en dessous de celle du matériau élastomère (1).
